(19) Europäisches Patentamt
European Patent Office
Office européen des brevets

(11) **EP 2 323 376 B1**

(12) **EUROPEAN PATENT SPECIFICATION**

(45) Date of publication and mention
of the grant of the patent:
**07.12.2016 Bulletin 2016/49**

(51) Int Cl.:
*H04N 5/345* *(2011.01)*          *H04N 5/232* *(2006.01)*

(21) Application number: **10186798.4**

(22) Date of filing: **07.10.2010**

(54) **Image sensor with shaking compensation**

Bildsensor mit Erschütterungsausgleich

Capteur d'images à compensation de tremblement

| | |
|---|---|
| (84) Designated Contracting States:<br>**AL AT BE BG CH CY CZ DE DK EE ES FI FR GB<br>GR HR HU IE IS IT LI LT LU LV MC MK MT NL NO<br>PL PT RO RS SE SI SK SM TR** | (74) Representative: **Hackney, Nigel John<br>Mewburn Ellis LLP<br>City Tower<br>40 Basinghall Street<br>London EC2V 5DE (GB)** |
| (30) Priority: **11.11.2009 US 616583** | (56) References cited:<br>**WO-A1-2006/043315      JP-A- 11 155 096<br>JP-A- 2002 027 326      JP-A- 2005 217 471<br>JP-A- 2008 022 321      RU-C1- 2 384 967<br>US-B2- 7 340 160** |
| (43) Date of publication of application:<br>**18.05.2011 Bulletin 2011/20** | |
| (73) Proprietor: **OmniVision Technologies, Inc.<br>Santa Clara, CA 95054 (US)** | |
| (72) Inventor: **Lee, Ho Seong<br>San Jose, CA 95135 (US)** | |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

This disclosure relates generally to imaging sensors, and in particular but not exclusively, relates to imaging sensors having elements for shaking compensation.

Integrated circuits have been developed to reduce the size of components used to implement circuitry. For example, integrated circuits have generally been using ever-smaller design features, which reduces the area used to implement the circuitry, such that design features can now be well under the wavelengths of visible light. With the ever-decreasing sizes of image sensors and the individual pixels that are part of a sensing array, it is, in general, important to more efficiently capture charges that are formed when incident light illuminates the sensing array. Further, the effect of camera motion (such as shaking caused by hand-held cameras) can more adversely affect the quality of images captured by the sensing arrays of ever-decreasing sizes

WO 2006/043315 discloses an image pickup device for use in a mobile telephone or in a digital still camera has a camera-shake compensation function realized by a simple structure. The image pickup device includes, in addition to a main image pickup element, a subsidiary image pickup element composed of fewer pixels and having less exposure time than the main image pickup element. While the main image pickup element is capturing a single image, the subsidiary image pickup element outputs a plurality of images. The image pickup device further includes camera-shake amount calculating means for correlating successive images to calculate camera-shake amounts; and camera-shake component removing means for removing, based on the calculated camera-shake amounts, the camera-shake components.

The present invention provides a camera as set out in claim 1, a method as set out in claim 8 and an imaging sensor as set out in claim 12.

Non-limiting and non-exhaustive embodiments of the invention are described with reference to the following figures, wherein like reference numerals refer to like parts throughout the various views unless otherwise specified.

FIG. 1 is a block diagram illustrating an imaging sensor, in accordance with an embodiment of the invention.
FIG. 2 is an illustration of sample shaking detection pixel groups, in accordance with embodiments of the invention.
FIG. 3 is a timing diagram illustrating read out of data from shaking detection pixel groups and the main pixel array, in accordance with an embodiment of the invention.
FIG. 4 is a timing diagram illustrating read out of data from the shaking detection pixel groups at a rate k times the main pixel array, in accordance with an embodiment of the invention.
FIG. 5 is a timing diagram illustrating read out of data from the shaking detection pixel groups at a rate four times the main pixel array, in accordance with an embodiment of the invention.
FIG. 6 is a timing diagram illustrating different resolution and frame rates between preview and capturing modes.
FIG. 7 is a timing diagram illustrating different resolution and frame rates between preview and capturing modes.
FIG. 8 (PRIOR ART) is a timing diagram illustrating different resolution and frame rates between preview and capturing modes.
FIG. 9 is a timing diagram illustrating different resolution and frame rates between preview and capturing modes, in accordance with an embodiment of the invention.
FIG. 10 is a timing diagram illustrating a time period in which anti-shake calculations can be performed, in accordance with an embodiment of the invention.
FIG. 11 is a flow diagram illustrating main pixel frame selection using shaking detection pixel groups, in accordance with an embodiment of the invention.

Embodiments of an image sensor with shaking compensation are described herein. In the following description numerous specific details are set forth to provide a thorough understanding of the embodiments. One skilled in the relevant art will recognize, however, that the techniques described herein can be practiced without one or more of the specific details, or with other methods, components, materials, etc. In other instances, well-known structures, materials, or operations are not shown or described in detail to avoid obscuring certain aspects.

Reference throughout this specification to "one embodiment" or "an embodiment" means that a particular feature, structure, or characteristic described in connection with the embodiment is included in at least one embodiment of the present invention. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments. The term "or" as used herein is normally meant to encompass a meaning of an inclusive function, such as "and/or." The term "camera" as used herein can also refer to multifunction devices (such as cell phones) that incorporate camera-like functions and often share components such as memory and processing functions.

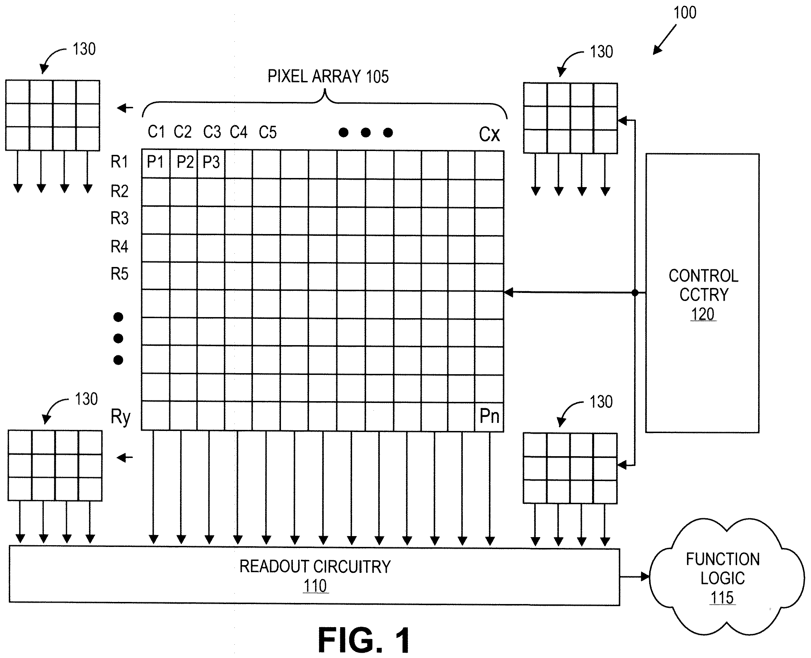

FIG. 1 is a block diagram illustrating an imaging sensor 100, in accordance with an embodiment of the invention. Embodiments of the present invention can be practiced using front side or back side illuminated imaging sensors. The illustrated embodiment of imaging sensor 100 includes a pixel array 105, read out circuitry 110, function logic 115, control circuitry 120, and one or more shaking detection pixel groups 130. The one or more shaking detection pixel groups 130 can be disposed as illustrated, although other locations, shapes, orientations, and sizes can be used.

Pixel array 105 is a two-dimensional ("2D") array of imaging pixels (e.g., pixels P1, P2 ..., Pn). In one embodiment, each pixel is an active pixel sensor ("APS"), such as a complementary metal-oxide-semiconductor ("CMOS") imaging pixel. Each pixel typically has a photosensitive region, such as a photodiode region, which is used to collect charge that is generated by light incident on the pixel. As illustrated, each pixel is arranged into a row (e.g., rows R1 to Ry) and a column (e.g., column C1 to Cx) to acquire image data of a person, place, or object, which can then be used to render a 2D image of the person, place, or object. Each pixel can comprise subpixel groups (such as four pixels having color micro-lenses arranged in a Bayer pattern) for different colors.

After each pixel has acquired its image data or image charge, the image data is read out by read out circuitry 110 and transferred to function logic 115. Read out circuitry 110 may include amplification circuitry, analog-to-digital conversion circuitry, or otherwise. Function logic 115 may include logic circuitry such as discrete logic, one or more processors, and/or memory (including lookup tables) for processing shaking detection pixel group data. Function logic can also be used to store or manipulate the image data by applying post image effects (e.g., crop, rotate, remove red eye, adjust brightness, adjust contrast, or otherwise). In one embodiment, read out circuitry 110 may read out a row of image data at a time along read out column lines (illustrated) or may read out the image data using a variety of other techniques (not illustrated), such as a serial read out or a full parallel read out of all pixels simultaneously.

Control circuitry 120 is coupled to pixel array 105 to control operational characteristic of pixel array 105. For example, control circuitry 120 may generate a shutter signal for controlling image acquisition. The shutter signal can be generated in response to a user pressing a shutter button, receiving a signal from a strobe light, an expiration of a timer signal, and the like.

In one embodiment, a color pattern (e.g. a Bayer pattern) and image processing may be used to reconstruct the RGB colors for each pixel. In another embodiment, a plurality of separate image sensors may be used to determine the RGB colors for an individual pixel by combining the image of the same pixel from each sensor to reconstruct the RGB colors for the individual pixel.

The one or more shaking detection pixel groups 130 are used, for example, to reduce blurring that can result from taking a picture using a hand-held camera. A picture taken by a mobile camera can be blurred due to, for example, hand shaking, movement caused by a mechanical shutter, or pushing the snapshot button. The teachings of the present disclosure allow for reduced blurring effect caused by such movements within a final captured image. In various embodiments, the teachings can be implemented in a cost effective manner in order to be useful in consumer electronics products.

In contrast, conventional methods often reduce the impact of camera movement on final captured image by using mechanical suspensions with counter acting drive mechanisms. Often an electromechanical motion sensing device is included in the system. Other conventional methods may include applying a data processing algorithm to the entire set of data with each frame captured, which requires a large amount of memory and/or a filter circuit that requires a large amount of complicated logic software or logic circuitry. The typically high cost of the conventional solutions often makes them less acceptable for lower cost consumer electronics.

The one or more shaking detection pixel groups 130 can be disposed as illustrated, although other locations can be used. The pixels which are in the "shaking detection pixel groups 130 can be any size depending on sensor design. One or more shaking detection pixel groups 130 can be implemented in various embodiments depending on cost considerations and it can be located in any place on the sensor array depending on the design and application requirements. Generally, more shaking detection pixel groups 130 results in better performance, and more pixels within each group results in better performance.

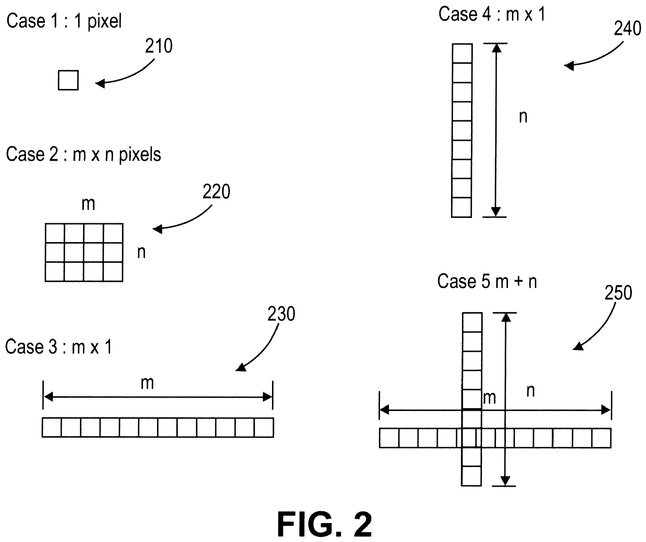

FIG. 2 is an illustration of sample shaking detection pixel groups. One or more extra pixel groups can be used to detect the amount of shaking of an image. Each extra pixel group can be operated with a faster frame rate or faster read out timing (such as at a rate that is twice or more) than reading out image information from the main pixel array 105.

Each shaking detection pixel group 130 can be arranged as (for example) a single pixel 210, an m-by-n array 220, an m-long row 230, an n-high column 240, or an m-long row and n-high column 250. Shaking detection pixel groups 130 can be formed by using a subset (which includes the set, by definition) of a pixel array. Thus the one or more shaking detection pixel groups 130 can be formed from subsets of pixels in an array sharing the same substrate as the main pixel array 105. In other embodiments separate substrates can be used for the one or more shaking detection pixel groups 130 and the main pixel array 105.

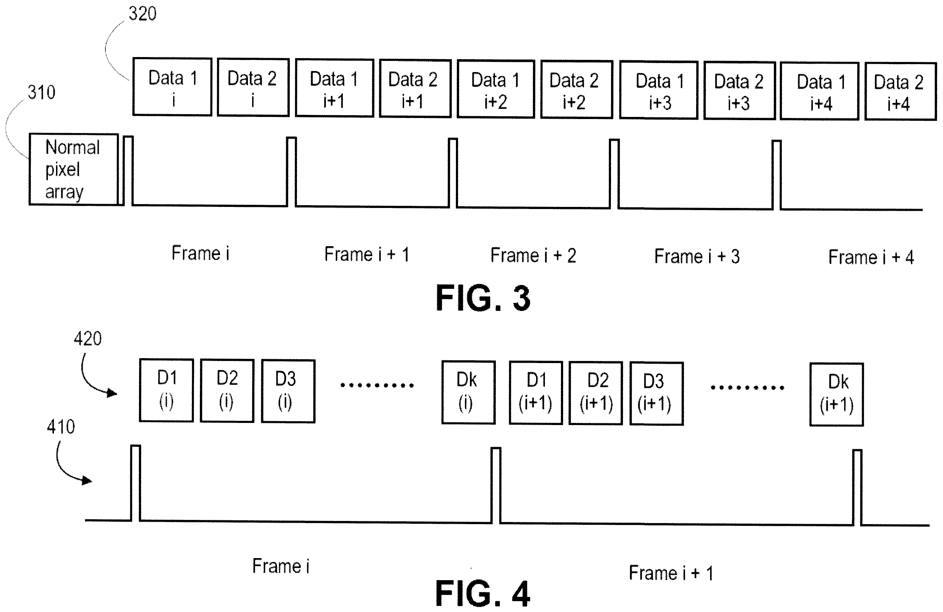

As discussed above, the shaking detection pixel groups 130 are typically read out at a rate that is faster than the rate at which the main pixel array is read out. FIG. 3 is a timing diagram illustrating read out of data from the shaking detection pixel groups 130 and the main pixel array 105. Row 310 illustrates the rate at which frame read outs occur from the main pixel array 105. Row 320 illustrates the rate at which read out occurs from the shaking detection pixel groups 130. In the illustrated embodiment, row 320 illustrates the rate at which read out occurs from the shaking detection pixel groups 130 is twice as fast as the read out that occurs from the main pixel array 105.

The data in row 320 is the average luminance value for shaking detection pixel groups 130. In the illustrated example, the "shaking amount" for each frame can be calculated as:

$$\text{shaking amount for Frame } i = \text{ABS}(\text{Data 1}(i) - \text{Data2}(i)),$$

where ABS(x) is the absolute value for x.

More generally, the equation can be described as:

$$\text{shaking amount for Frame } i = \text{STD}(\text{Data 1}(i), \text{Data2}(i) \ldots\ldots \text{Datak}(i)),$$

where STD(x(k)) is the standard deviation value for Data 1(i), Data2(i) ...... Datak(i)

Where multiple (such as four) groups are used (group A, group B, group C, group D), the shaking amount can be calculated as:

$$\text{shaking amount for Pixel group A in Frame } i = \text{STD}(\text{Data A 1}(i),$$

$$\text{Data A 2}(i) \ldots\ldots \text{Data A k }(i)),$$

$$\text{shaking amount for Pixel group B in Frame } i = \text{STD}(\text{Data B 1}(i),$$

$$\text{Data A 2}(i) \ldots\ldots \text{Data B k }(i)),$$

$$\text{shaking amount for Pixel group C in Frame } i = \text{STD}(\text{Data C 1}(i),$$

$$\text{Data A 2}(i) \ldots\ldots \text{Data C k }(i)),$$

$$\text{shaking amount for Pixel group D in Frame } i = \text{STD}(\text{Data D 1}(i),$$

$$\text{Data A 2}(i) \ldots\ldots \text{DataD k }(i)).$$

A final shaking amount can be calculated by using an average value method, a greatest value method, or otherwise. A final shaking amount calculated using an average value method may be determined as follows:

$$\text{final shaking amount for frame } i = (\text{shaking amount for Pixel group A in}$$

$$\text{Frame I} + \text{shaking amount for Pixel group B in Frame I} +$$

$$\text{shaking amount for Pixel group C in Frame I} + \text{shaking amount}$$

$$\text{for Pixel group D in Frame } i)/4.$$

A final shaking amount calculated using a greatest value method can be determined as outlined below. Assuming the shaking amount for Pixel group A in Frame I is the largest value in Frame I, then the final shaking amout is:

$$\text{final shaking amount for frame I} = \text{shaking amount for Pixel group A in}$$

$$\text{Frame I}$$

FIG. 4 is a timing diagram illustrating read out of data from the shaking detection pixel groups 130 at a rate k times the main pixel array 105. Row 410 illustrates the rate at which frame read outs occur from the main pixel array 105. Row 420 illustrates the rate at which read out occurs from the shaking detection pixel groups 130. Thus, row 420 illustrates the rate at which read out occurs from the shaking detection pixel groups 130 is k times as fast as the read out that occurs from the main pixel array 105.

Where the final shaking amount is applied at a rate k times faster than the normal pixel read out period, then a "shaking amount" can be described as:

$$\text{shaking amount for Frame } i = \text{STD}(\text{Data } 1(i), \text{Data2}(i) \dots \dots \text{Datak}(i)),$$

where STD(x(k)) is the standard deviation value for Data 1(i), Data2(i) ...... Datak(i).

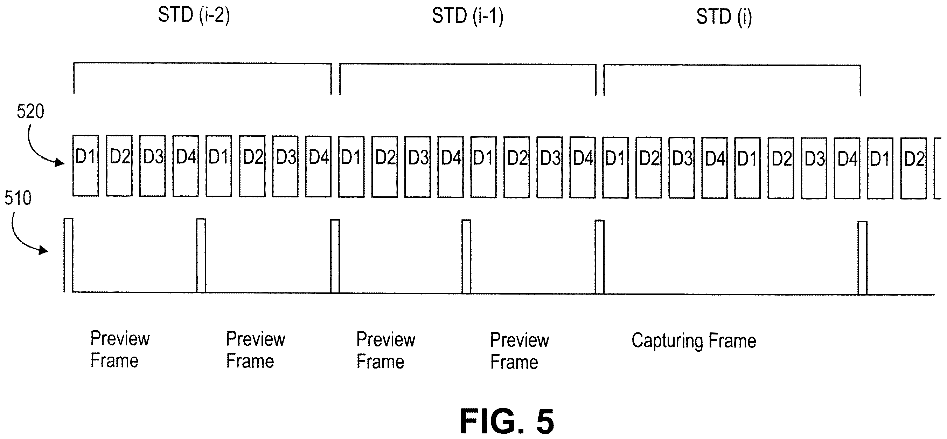

FIG. 5 is a timing diagram illustrating read out of data from the shaking detection pixel groups 130 at a rate four times main pixel array 105. Row 510 illustrates the rate at which frame read outs occur from main pixel array 105. Row 520 illustrates the rate at which read out occurs from the shaking detection pixel groups 130. Thus, row 520 illustrates that the rate at which read out occurs from the shaking detection pixel groups 130 is independent of the actual read out that occurs from the main pixel array 105.

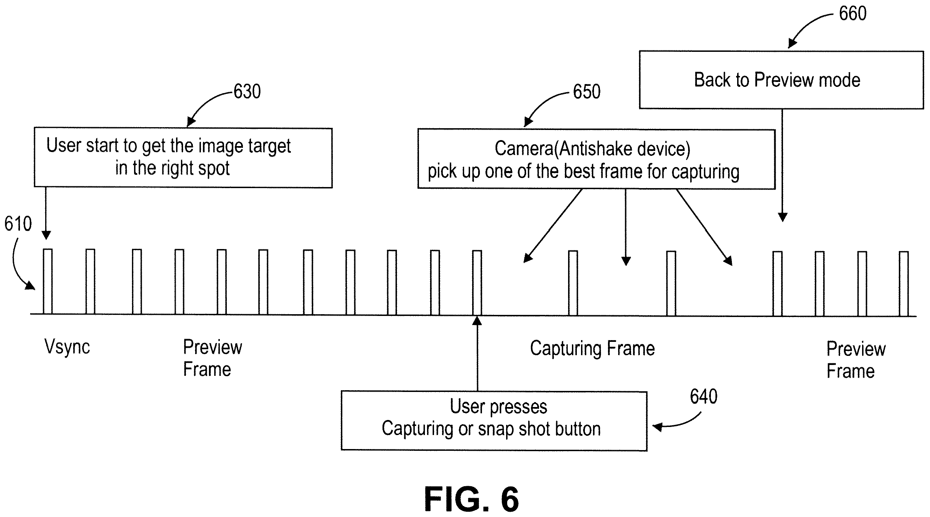

FIG. 6 is a timing diagram illustrating different resolution and frame rates between preview and capturing modes. Row 610 illustrates the rate at which frame read outs occur from the main pixel array 105. Time 630 illustrates when a user starts getting the image target in a desired spot. As illustrated in row 610, preview frame read outs are made during time 630. Time 640 illustrates when a user presses a "snapshot" button. Time 650 illustrates a period in time in which capturing frames are read out from the main pixel array 105. A camera anti-shake device can select any of the capturing frames as a best frame. At time 660, the camera returns to a preview mode where preview frame read outs are made. However, in many cases, because the user is usually trying to get the right image target in the right spot several seconds before pressing the snapshot button, the camera has seen several similar frames before the snapshot button is pressed.

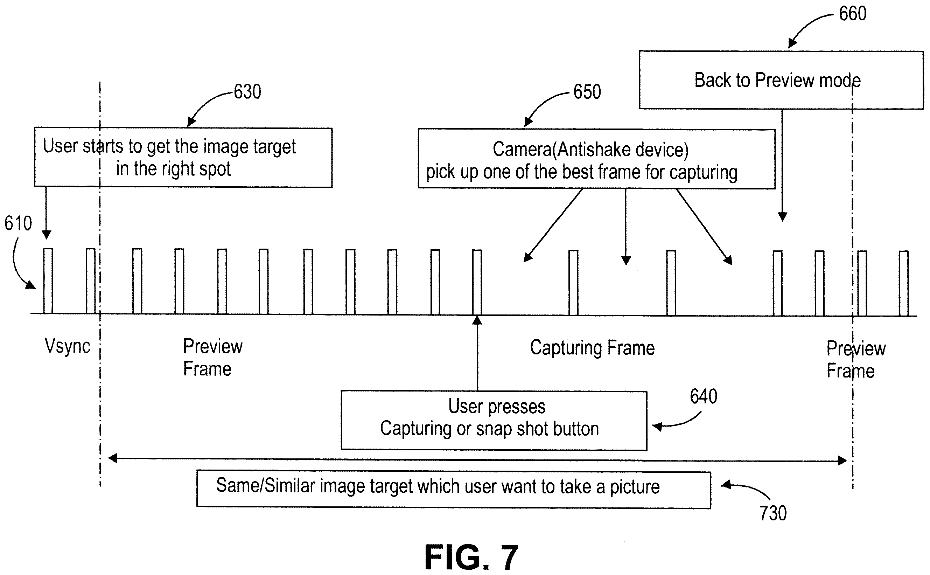

FIG. 7 is a timing diagram illustrating different resolution and frame rates between preview and capturing modes. Time period 730 illustrates a time period in which a same and/or similar image target is presented for which the user would like to capture. Because conventional or traditional anti-shake devices usually use a general or special high pass filter or anti-shake filter which uses normal sensor pixel data, it is difficult to correlate data from frames having different resolutions and frame rates.

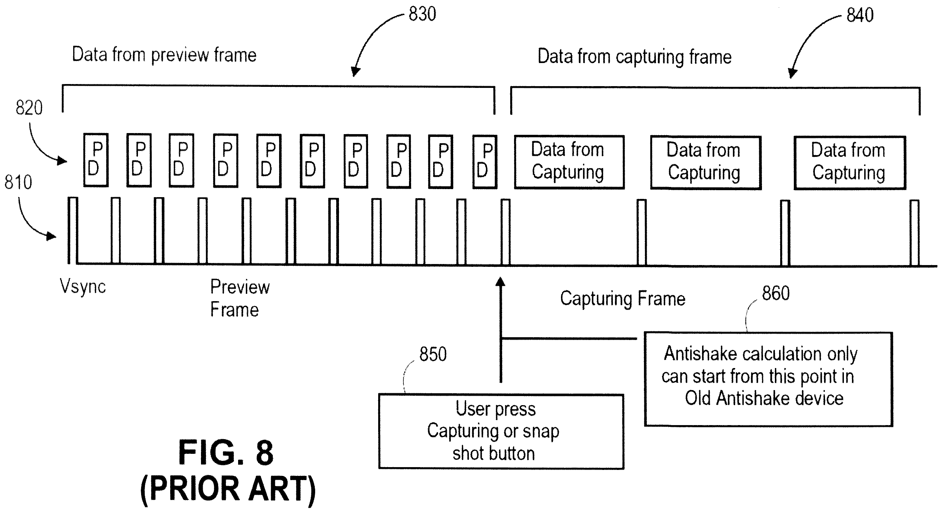

FIG. 8 is a timing diagram illustrating a conventional technique using different resolution and frame rates between preview and capturing modes. Row 810 illustrates the rate at which frame read outs occur from the main pixel array 105. Row 820 illustrates the rate at which a preview frame's anti-shake data (PD) is also read out from the main pixel array.. During preview mode 830, the data is typically read out with a faster frame rate but at a lower resolution. During frame capturing mode 840, the data is typically read out with a slower frame rate but at a higher resolution.

Because of the difficulty in correlating data from frames having different resolutions and frame rates, even though a camera can have same/similar image target from several frames before the user presses the capturing/snapshot button at time 850, the conventional an anti-shake device normally starts the anti-shake calculation or decision only after the user presses the capturing/snapshot button at time period 860. This limitation typically results in a very slow anti-shake response time or requires a large frame buffer to improve performance. In contrast, the present disclosure has a different read out period from the main pixel array. Because the "best frame" decision uses data from the shaking detection pixel groups 130, the shaking amount can be independently calculated.

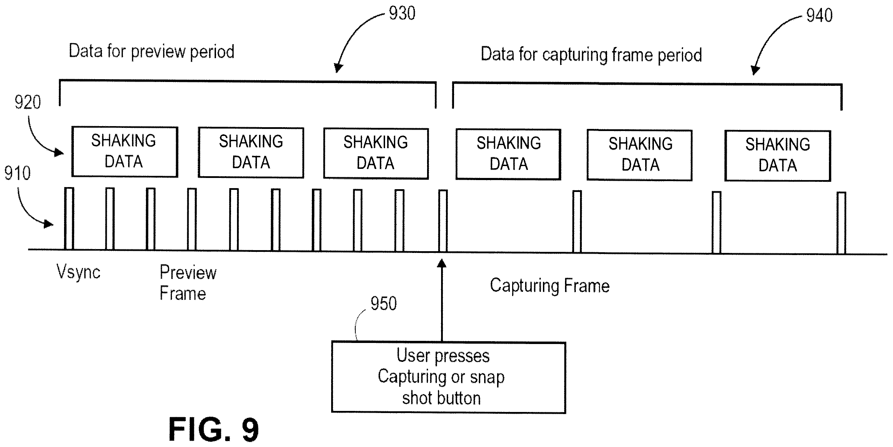

FIG. 9 is a timing diagram illustrating different resolution and frame rates between preview and capturing modes, in accordance with an embodiment of the invention. Row 910 illustrates the rate at which frame read outs occur from the main pixel array 105. Row 920 illustrates the rate at which shaking detection data is readout from shaking detection pixel groups 130. During preview mode 930, the shaking detection data can be read out with the same rate and resolution as the shaking detection data read out during frame capturing mode 940.

Because different read out periods and separate pixels are disclosed herein, the anti-shake related data can be calculated independently from the normal pixel array frame rate or resolution. Because the anti-shake related data can be calculated independently from the normal pixel array frame rate or resolution, the anti-shake related data can be calculated before the user presses the capturing/snapshot button at time 950.

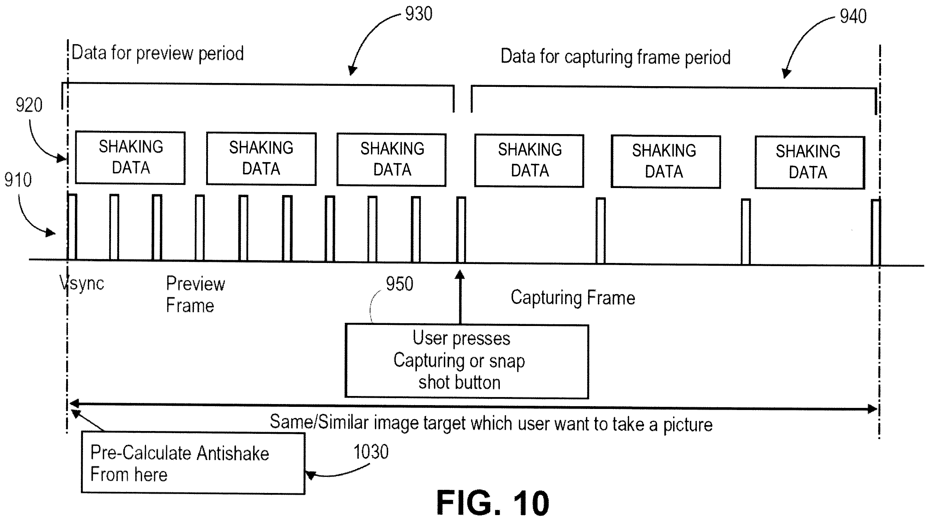

FIG. 10 is a timing diagram illustrating a time period in which anti-shake calculations can be performed. Anti-shake calculations can commence starting from time 1030. Because the image being captured is already focused several frames before the user presses the capturing button, a pre-shutter press calculation can be performed for better anti-shake algorithm performance.

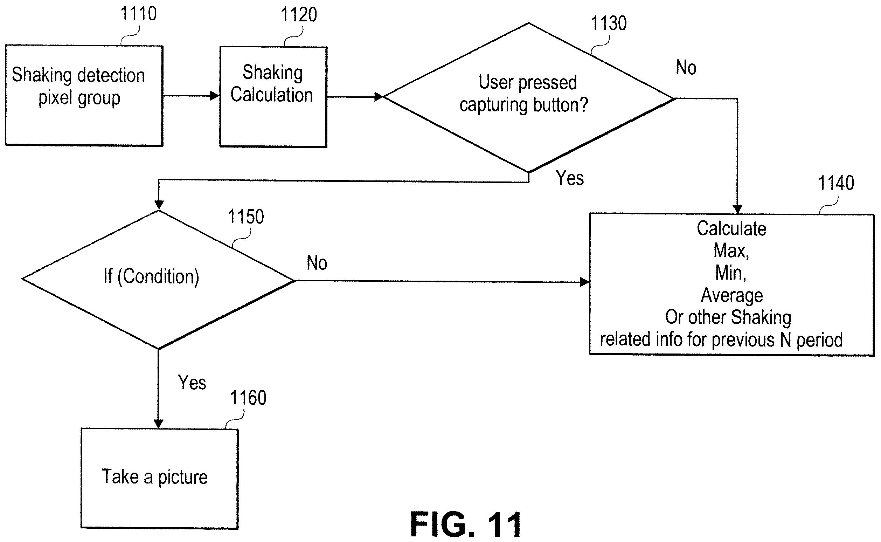

FIG. 11 is a flow diagram illustrating main pixel frame selection using shaking detection pixel groups. In operation 1110, shaking detection pixel group data is received from one or more shaking detection pixels groups. The shaking detection pixel group data is transmitted at a rate that is faster than a frame rate from the main pixel array. Average luminance information can be extracted from the received shaking detection pixel data.

In operation 1120, a shaking calculation is performed. The shaking information can be determined using shaking detection pixel group data using the following (or equivalent, similar and/or adapted) equation:

$$\text{Shaking amount for period } i = STD(\text{ Data 1}(i), \text{Data2}(i) \ldots \text{Datak}(i))$$

where STD(x(k)) is the standard deviation value for Data 1(i), Data2(i) ... Datak(i).

In operation 1130, it is determined whether a picture taking signal has been received. The picture taking signal can be, for example, a user has pressed a shutter button on a camera, a strobe signal, a timer signal, or the like. If the picture taking signal has been received, the logic flow proceeds to operation 1140.

In operation 1140, shaking detection pixel group data is used to calculate statistics such as Max, Min, Average, and/or other shaking related information for the previous N periods. The statistics can be used to determine whether a captured image frame would be potentially acceptable by, for example, comparing the calculated values with predetermined limits. Max is a value representing the maximum shaking value among N periods. Min is a value representing the minimum shaking value during N periods. Average is a value representing the average shaking value for N periods. N is an integer number representing the number of periods over which the Max, Min, and Average values can be calculated. The value for N can be selected by an application designer in accordance with speed, power, cost, and accuracy tradeoffs.

If in operation 1130 it is determined that the picture taking signal has not been received, the logic flow proceeds to operation 1150, where the "If (condition)" is evaluated. The If (Condition) can be evaluated using shaking detection pixel group derived data such as Max, Min, or Average and current period shaking information. For example, the current period shaking value can be scaled and compared with the values of Max, Min, or Average to determine whether, for example, to select a current frame. If a scaled current period value is greater than the Max value, and is greater than the Average value, and is less than the Min value, then the process flow proceeds to operation 1160 when an image frame from the main pixel array is selected as the photograph associated with the received picture taking signal. If the result of the comparisons is negative, then the process flow proceeds to operation 1140, which is discussed above. In various embodiments, acceptable values to determine frame selection can be expressed as percentages, ranges of permissible values, lookup tables, or the like. The determination of whether to select a current frame as a final picture can be determined by using one or several conditions as illustrated in the above example. Threshold values for the logic conditions can also be selected by an application designer in accordance with speed, power, cost, and accuracy tradeoffs.

The above description of illustrated embodiments of the invention, including what is described in the Abstract, is not intended to be exhaustive or to limit the invention to the precise forms disclosed. While specific embodiments of, and examples for, the invention are described herein for illustrative purposes, various modifications are possible within the scope of the invention, as those skilled in the relevant art will recognize.

These modifications can be made to the invention in light of the above detailed description. The terms used in the following claims should not be construed to limit the invention to the specific embodiments disclosed in the specification. Rather, the scope of the invention is to be determined entirely by the following claims, which are to be construed in accordance with established doctrines of claim interpretation.

The following statements provide general expressions of the disclosure herein.

A. A camera, comprising:

a main pixel array for generating image frames of an image at an image frame rate;
a first shaking detection pixel group for generating shaking detection data wherein one or more pixels of the first shaking detection pixel group are sampled at a rate that is faster than the image frame rate; and

logic circuitry for evaluating the shaking detection data to select a frame of the generated image frames after receiving a picture taking signal.

B. The camera of statement A, further comprising a second shaking detection pixel group for generating shaking detection data where one or more pixels of the second shaking detection pixel group are sampled at a rate that is faster than the image frame rate.

C. The camera of statement A, wherein the first shaking detection pixel group includes a plurality of pixels arranged in rows and columns.

D. The camera of statement C, wherein the number of pixels in each row is the same.

E. The camera of statement A, wherein the image frame rate comprises a capturing frame rate and wherein the one or more pixels of the first shaking detection pixel group are each sampled at a rate that is at least twice as fast as the capturing frame rate.

F. The camera of statement A, further comprising capturing preview frames with the main pixel array before receiving the picture taking signal.

G. The camera of statement F, wherein the one or more pixels of the first shaking detection pixel group are sampled at a rate that is faster than a capture rate of the preview frames.

H. The camera of statement F, wherein one of the image frames is selected in response to the picture taking signal.

I. The camera of statement A, wherein a logic function is performed on the shaking detection data received during a period of time determined by the image frame rate.

J. The camera of statement I, wherein the logic function is a standard of deviation function that is performed on shaking detection data received during a period determined by the image frame rate.

K. The camera of statement I, wherein the logic function is performed before receiving the picture taking signal.

L. The camera of statement K, wherein the logic function performed before receiving the picture taking signal is used to select an image frame from the main pixel array after receiving the picture taking signal.

M. The camera of statement A, wherein the logic function performed compares a calculated value with a predetermined limit.

N. The camera of statement A, wherein the main pixel array and the first shaking detection pixel group are formed on the same substrate.

O. A method for image stabilization, comprising:

  receiving incident light of an image at a camera,
  illuminating a main pixel array and a first shaking pixel detection group with the received incident light;
  generating image frames in response to the incident light illuminating the main pixel array;
  generating shaking detection data by sampling one or more pixels of the first shaking detection pixel group at a rate that is faster than the image frame rate;
  receiving a picture taking signal; and
  selecting a final image from the generated image frames in response to the calculated pixel shaking data and the received picture taking signal.

P. The method of statement O, further comprising generating shaking detection data by sampling one or more pixels of a second shaking detection pixel group at a rate that is faster than the image frame rate, wherein the received incident light illuminates the second shaking detection pixel group.

Q. The method of statement O, further comprising evaluating the shaking detection data to determine a time in which to select a frame of the generated image frames to associate with the received picture taking signal.

R. The method of statement O, further comprising generating preview frames using the main pixel array before receiving the picture taking signal.

S. The method of statement R, further comprising performing a logic function on the shaking detection data received during a period of time determined by the image frame rate.

T. The method of statement S, wherein the logic function is performed before receiving the picture taking signal.

U. An imaging sensor comprising:

  a substrate;
  a main pixel array formed in the substrate, wherein the main pixel array is arranged to generate image frames of an image at an image frame rate;
a first shaking detection pixel group formed in the substrate, wherein the first shaking detection pixel group is arranged to generate shaking detection data where one or more pixels of the first shaking detection pixel group are sampled at a rate that is at least twice as fast as the image frame rate; and

logic circuitry for evaluating the shaking detection data before receiving a picture taking signal and wherein a frame is selected in response to the evaluated shaking detection data after receiving the picture taking signal.

V. The imaging sensor of statement U, further comprising a second shaking detection pixel group located separate from the first shaking detection pixel group for generating shaking detection data where one or more pixels of the second shaking detection pixel group are sampled at a rate that is faster than the image frame rate.

W. The imaging sensor of statement V, wherein the image frames are generated in response to the picture taking signal and wherein the image frames comprise image capture frames.

## Claims

1. A camera, comprising:

   a main pixel array (105) for generating image frames of an image at an image frame rate;
   a first shaking detection pixel group (130) for generating shaking detection data wherein one or more pixels of the first shaking detection pixel group are sampled at a rate that is faster than the image frame rate;
   a second shaking detection pixel group (130) for generating shaking detection data where one or more pixels of the second shaking detection pixel group are sampled at a rate that is faster than the image frame rate; and

   logic circuitry (115) for evaluating the shaking detection data to select a frame of the generated image frames after receiving a picture taking signal;
   wherein the first shaking detection pixel group includes a plurality of pixels arranged in rows and columns, wherein optionally, the number of pixels in each row is the same; and
   wherein the image frame rate comprises a capturing frame rate and wherein the one or more pixels of the first shaking detection pixel group are each sampled at a rate that is at least twice as fast as the capturing frame rate.

2. The camera of claim 1, further comprising capturing preview frames with the main pixel array before receiving the picture taking signal, wherein optionally, the one or more pixels of the first shaking detection pixel group are sampled at a rate that is faster than a capture rate of the preview frames and/or one of the image frames is selected in response to the picture taking signal.

3. The camera of claim 1, wherein a logic function is performed on the shaking detection data received during a period of time determined by the image frame rate.

4. The camera of claim 3, wherein the logic function is a standard of deviation function that is performed on shaking detection data received during a period determined by the image frame rate.

5. The camera of claim 3, wherein the logic function is performed before receiving the picture taking signal, wherein optionally, the logic function performed before receiving the picture taking signal is used to select an image frame from the main pixel array after receiving the picture taking signal.

6. The camera of claim 1, wherein the logic function performed compares a calculated value with a predetermined limit.

7. The camera of claim 1, wherein the main pixel array and the first shaking detection pixel group are formed on the same substrate.

8. A method for image stabilization, comprising:

   receiving incident light of an image at a camera,
   illuminating a main pixel array (105), a first shaking pixel detection group (130) and a second shaking detection pixel group (130) with the received incident light, wherein the first shaking detection pixel group includes a plurality of pixels arranged in rows and columns, wherein optionally, the number of pixels in each row is the same; generating image frames in response to the incident light illuminating the main pixel array at an image frame rate; generating shaking detection data by sampling one or more pixels of the first shaking detection pixel group at a rate that is faster than the image frame rate, wherein the image frame rate comprises a capturing frame rate and wherein the one or more pixels of the first shaking detection pixel group are each sampled at a rate that is at least twice as fast as the capturing frame rate; generating shaking detection data by sampling one or more pixels of the second shaking detection pixel group at a rate that is faster than the image frame rate; receiving a picture taking signal; and selecting a final image from the generated image frames in response to the calculated pixel shaking data and the received picture taking signal.

9. The method of claim 8, further comprising:

evaluating the shaking detection data to determine a time in which to select a frame of the generated image frames to associate with the received picture taking signal.

10. The method of claim 8, further comprising generating preview frames using the main pixel array before receiving the picture taking signal.

11. The method of claim 10, further comprising performing a logic function on the shaking detection data received during a period of time determined by the image frame rate, wherein optionally, the logic function is performed before receiving the picture taking signal.

12. An imaging sensor (100) comprising:

a substrate;
a main pixel array (105) formed in the substrate, wherein the main pixel array is arranged to generate image frames of an image at an image frame rate;
a first shaking detection pixel group (130) formed in the substrate, wherein the first shaking detection pixel group is arranged to generate shaking detection data where one or more pixels of the first shaking detection pixel group are sampled at a rate that is at least twice as fast as the image frame rate;
a second shaking detection pixel group (130) for generating shaking detection data where one or more pixels of the second shaking detection pixel group are sampled at a rate that is faster than the image frame rate; and

logic circuitry (115) for evaluating the shaking detection data before receiving a picture taking signal and wherein a frame is selected in response to the evaluated shaking detection data after receiving the picture taking signal;
wherein the first shaking detection pixel group includes a plurality of pixels arranged in rows and columns, wherein optionally, the number of pixels in each row is the same; and
wherein the image frame rate comprises a capturing frame rate and wherein the one or more pixels of the first shaking detection pixel group are each sampled at a rate that is at least twice as fast as the capturing frame rate.


**Patentansprüche**

1. Kamera, umfassend
eine Hauptpixelanordnung (105) zur Erzeugung von Einzelbildern eines Bilds mit einer Einzelbildrate;
eine erste Verwacklungsdetektions-Pixelgruppe (130) zur Erzeugung von Verwacklungsdetektionsdaten, wobei ein oder mehrere Pixel der ersten Verwacklungsdetektions-Pixelgruppe mit einer Rate abgetastet werden, die schneller ist als die Einzelbildrate;
eine zweite Verwacklungsdetektions-Pixelgruppe (130) zur Erzeugung von Verwacklungsdetektionsdaten, wobei ein oder mehrere Pixel der zweiten Verwacklungsdetektions-Pixelgruppe mit einer Rate abgetastet werden, die schneller ist als die Einzelbildrate; und
eine Logikschaltung (115) zur Evaluierung der Verwacklungsdetektionsdaten, um nach dem Empfangen eines Bildaufnahmesignals ein Einzelbild der generierten Einzelbilder auszuwählen; wobei
die erste Verwacklungsdetektions-Pixelgruppe eine Vielzahl von Pixeln umfasst, die in Zeilen und Spalten angeordnet sind, wobei optional die Anzahl von Pixeln in jeder Zeile die gleiche ist; und wobei
die Einzelbildrate eine Erfassungseinzelbildrate umfasst und wobei das eine oder die mehreren Pixel der ersten Verwacklungsdetektions-Pixelgruppe mit einer Rate abgetastet werden, die mindestens zweimal so schnell ist wie die Erfassungseinzelbildrate.

2. Kamera nach Anspruch 1, ferner umfassend das Erfassen von Voransichtseinzelbildern mit der Hauptpixelanordnung vor dem Empfangen des Bildaufnahmesignals, wobei optional das eine oder die mehreren Pixel der ersten Verwacklungsdetektions-Pixelgruppe mit einer Rate abgetastet werden, die schneller ist als eine Erfassungsrate der Voransichtseinzelbilder und/oder wobei eines der Einzelbilder als Antwort auf das Bildaufnahmesignal ausgewählt wird.

3. Kamera nach Anspruch 1, wobei an den Verwacklungsdetektionsdaten, die während eines durch die Einzelbildrate bestimmten Zeitraums empfangen werden, eine Logikfunktion durchgeführt wird.

4. Kamera nach Anspruch 3, wobei die Logikfunktion eine Standardabweichungsfunktion ist, die an den während eines durch die Einzelbildrate bestimmten Zeitraums empfangenen Verwacklungsdetektionsdaten durchgeführt wird.

5. Kamera nach Anspruch 3, wobei die Logikfunktion durchgeführt wird, bevor das Bildaufnahmesignal empfangen wird, wobei optional die vor dem Empfangen des Bildaufnahmesignals durchgeführte Logikfunktion verwendet wird, um ein Einzelbild von der Hauptpixelanordnung auszuwählen, nachdem das Bildaufnahmesignal empfangen wurde.

6. Kamera nach Anspruch 1, wobei die durchgeführte Logikfunktion einen berechneten Wert mit einer vorbestimmten Grenze vergleicht.

7. Kamera nach Anspruch 1, wobei die Hauptpixelanordnung und die erste Verwacklungsdetektions-Pixelgruppe auf demselben Substrat ausgebildet sind.

8. Verfahren zur Bildstabilisierung, umfassend:

Empfangen von einfallendem Licht eines Bilds in einer Kamera;
Beleuchten einer Hauptpixelanordnung (105), einer ersten Verwacklungsdetektions-Pixelgruppe (130) und einer zweiten Verwacklungsdetektions-Pixelgruppe (130) mit dem empfangenen einfallenden Licht, wobei die erste Verwacklungsdetektions-Pixelgruppe eine Vielzahl von Pixeln umfasst, die in Zeilen und Spalten angeordnet sind, wobei optional die Anzahl von Pixeln in jeder Zeile die gleiche ist;
Erzeugen von Einzelbildern als Antwort auf das einfallende Licht, das die Hauptpixelanordnung beleuchtet, mit einer Einzelbildrate;
Erzeugen von Verwacklungsdetektionsdaten durch Abtasten von einem oder mehreren Pixeln der ersten Verwacklungsdetektions-Pixelgruppe mit einer Rate, die schneller als die Einzelbildrate ist, wobei die Einzelbildrate eine Erfassungseinzelbildrate umfasst und wobei das eine oder die mehreren Pixel der ersten Verwacklungsdetektions-Pixelgruppe jeweils mit einer Rate abgetastet werden, die mindestens zweimal so schnell wie die Erfassungseinzelbildrate ist;
Erzeugen von Verwacklungsdetektionsdaten durch Abtasten von einem oder mehreren Pixeln der zweiten Verwacklungsdetektions-Pixelgruppe mit einer Rate, die schneller ist als die Einzelbildrate;
Empfangen eines Bildaufnahmesignals; und
Auswählen eines endgültigen Bilds von den erzeugten Einzelbildern als Antwort auf die errechneten Pixelbewegungsdaten und das empfangene Bildaufnahmesignal.

9. Verfahren nach Anspruch 8, ferner umfassend:

Evaluieren der Verwacklungsdetektionsdaten, um einen Zeitpunkt auszuwählen, an dem ein Einzelbild der erzeugten Einzelbilder ausgewählt werden soll, das dem empfangenen Bildaufnahmesignal zuzuordnen ist.

10. Verfahren nach Anspruch 8, ferner umfassend das Erzeugen von Voransichtseinzelbildern unter Verwendung der Hauptpixelanordnung, bevor das Bildaufnahmesignal empfangen wird.

11. Verfahren nach Anspruch 10, ferner umfassend das Durchführen einer Logikfunktion an den Verwacklungsdetektionsdaten, die während eines durch die Einzelbildrate bestimmten Zeitraums empfangen wurden, wobei optional die Logikfunktion durchgeführt wird, bevor das Bildaufnahmesignal empfangen wird.

12. Bildgebungssensor (100), umfassend:

ein Substrat;

eine Hauptpixelanordnung (105), die im Substrat ausgebildet ist, wobei die Hauptpixelanordnung angeordnet ist, um Einzelbilder eines Bildes mit einer Einzelbildrate zu erzeugen;

eine erste Verwacklungsdetektions-Pixelgruppe (130), die im Substrat ausgebildet ist, wobei die erste Verwacklungsdetektions-Pixelgruppe zur Erzeugung von Verwacklungsdetektionsdaten angeordnet ist, wobei ein oder mehrere Pixel der ersten Verwacklungsdetektions-Pixelgruppe mit einer Rate abgetastet werden, die mindestens zweimal so schnell ist wie die Einzelbildrate;

eine zweite Verwacklungsdetektions-Pixelgruppe (130) zur Erzeugung von Verwacklungsdetektionsdaten, wobei ein oder mehrere Pixel der zweiten Verwacklungsdetektions-Pixelgruppe mit einer Rate abgetastet werden, die schneller ist als die Einzelbildrate; und

eine Logikschaltung (115) zur Evaluierung der Verwacklungsdetektionsdaten, bevor ein Bildaufnahmesignal empfangen wird, wobei ein Einzelbild nach dem Empfangen eines Bildaufnahmesignals als Antwort auf die evaluierten Verwacklungsdetektionsdaten ausgewählt wird; wobei

die erste Verwacklungsdetektions-Pixelgruppe eine Vielzahl von Pixeln umfasst, die in Zeilen und Spalten angeordnet sind, wobei optional die Anzahl von Pixeln in jeder Zeile die gleiche ist; und wobei die Einzelbildrate eine Erfassungseinzelbildrate umfasst und wobei das eine oder die mehreren Pixel der ersten Verwacklungsdetektions-Pixelgruppe jeweils mit einer Rate abgetastet werden, die mindestens zweimal so schnell ist wie die Erfassungseinzelbildrate.

## Revendications

**1.** Caméra comprenant :

une matrice de pixels principale (105) destinée à générer des trames d'image d'une image à un taux de trames d'image ;

un premier groupe de pixels de détection de tremblement (130) destiné à générer des données de détection de tremblement, dans lequel un ou plusieurs pixels du premier groupe de pixels de détection de tremblement sont échantillonnés à un taux qui est supérieur au taux de trames d'image ;

un second groupe de pixels de détection de tremblement (130) destiné à générer des données de détection de tremblement où un ou plusieurs pixels du second groupe de pixels de détection de tremblement sont échantillonnés à un taux qui est supérieur au taux de trames d'image ; et

un montage de circuits logiques (115) destiné à évaluer les données de détection de tremblement pour sélectionner une trame des trames d'image générées, suite à la réception d'un signal de prise de vue ;

dans lequel le premier groupe de pixels de détection de tremblement inclut une pluralité de pixels agencés en lignes et en colonnes, dans lequel, facultativement, le nombre de pixels dans chaque ligne est le même ; et dans lequel le taux de trames d'image comprend un taux de capture de trames et dans lequel ledit ou lesdits plusieurs pixels du premier groupe de pixels de détection de tremblement sont chacun échantillonnés à un taux qui est au moins deux fois supérieur au taux de capture de trames.

**2.** Caméra selon la revendication 1, comprenant en outre l'étape consistant à capturer des trames de prévisualisation avec la matrice de pixels principale avant de recevoir le signal de prise de vue, dans laquelle, facultativement, ledit ou lesdits plusieurs pixels du premier groupe de pixels de détection de tremblement sont échantillonnés à un taux qui est supérieur à un taux de capture des trames de prévisualisation, et/ou l'une des trames d'image est sélectionnée en réponse au signal de prise de vue.

**3.** Caméra selon la revendication 1, dans laquelle une fonction logique est mise en oeuvre sur les données de détection de tremblement reçues au cours d'une période de temps déterminée par le taux de trames d'image.

**4.** Caméra selon la revendication 3, dans laquelle la fonction logique est une fonction d'écart type qui est mise en oeuvre sur des données de détection de tremblement reçues au cours d'une période déterminée par le taux de trames d'image.

**5.** Caméra selon la revendication 3, dans laquelle la fonction logique est mise en oeuvre avant de recevoir le signal de prise de vue, dans laquelle, facultativement, la fonction logique mise en oeuvre avant de recevoir le signal de prise de vue est utilisée en vue de sélectionner une trame d'image à partir de la matrice de pixels principale, suite à la réception du signal de prise de vue.

**6.** Caméra selon la revendication 1, dans laquelle la fonction logique mise en oeuvre compare une valeur calculée à une limite prédéterminée.

**7.** Caméra selon la revendication 1, dans laquelle la matrice de pixels principale et le premier groupe de pixels de détection de tremblement sont formés sur le même substrat.

**8.** Procédé de stabilisation d'image, comprenant les étapes ci-dessous consistant à :

> recevoir de la lumière incidente d'une image au niveau d'une caméra ;
> éclairer une matrice de pixels principale (105), un premier groupe de pixels de détection de tremblement (130) et un second groupe de pixels de détection de tremblement (130), à l'aide de la lumière incidente reçue, dans lequel le premier groupe de pixels de détection de tremblement inclut une pluralité de pixels agencés en lignes et en colonnes, dans lequel, facultativement, le nombre de pixels dans chaque ligne est le même ;
> générer des trames d'image en réponse au fait que la lumière incidente éclaire la matrice de pixels principale à un taux de trames d'image ;
> générer des données de détection de tremblement en échantillonnant un ou plusieurs pixels du premier groupe de pixels de détection de tremblement à un taux qui est supérieur au taux de trames d'image, dans lequel le taux de trames d'image comprend un taux de capture de trames et dans lequel ledit ou lesdits plusieurs pixels du premier groupe de pixels de détection de tremblement sont chacun échantillonnés à un taux qui est au moins deux fois supérieur au taux de capture de trames ;
> générer des données de détection de tremblement en échantillonnant un ou plusieurs pixels du second groupe de pixels de détection de tremblement à un taux qui est supérieur au taux de trames d'image ;
> recevoir un signal de prise de vue ; et
> sélectionner une image finale à partir des trames d'image générées, en réponse aux données de détection de tremblement calculées et au signal de prise de vue reçu.

**9.** Procédé selon la revendication 8, comprenant en outre l'étape ci-dessous consistant à évaluer les données de détection de tremblement en vue de déterminer un instant au cours duquel sélectionner une trame des trames d'image générées à associer au signal de prise de vue reçu.

**10.** Procédé selon la revendication 8, comprenant en outre l'étape consistant à générer des trames de prévisualisation en utilisant la matrice de pixels principale, avant de recevoir le signal de prise de vue.

**11.** Procédé selon la revendication 10, comprenant en outre l'étape consistant à mettre en oeuvre une fonction logique sur les données de détection de tremblement reçues au cours d'une période de temps déterminée par le taux de trames d'image, dans lequel, facultativement, la fonction logique est mise en oeuvre avant de recevoir le signal de prise de vue.

**12.** Capteur d'imagerie (100) comprenant :

> un substrat ;
> une matrice de pixels principale (105) formée dans le substrat, dans lequel la matrice de pixels principale est agencée de manière à générer des trames d'image d'une image à un taux de trames d'image ;
> un premier groupe de pixels de détection de tremblement (130) formé dans le substrat, dans lequel le premier groupe de pixels de détection de tremblement est agencé de manière à générer des données de détection de tremblement où un ou plusieurs pixels du premier groupe de pixels de détection de tremblement sont échantillonnés à un taux qui est au moins deux fois supérieur au taux de trames d'image ;
> un second groupe de pixels de détection de tremblement (130) destiné à générer des données de détection de tremblement où un ou plusieurs pixels du second groupe de pixels de détection de tremblement sont échantillonnés à un taux qui est supérieur au taux de trames d'image ; et
> un montage de circuits logiques (115) destiné à évaluer les données de détection de tremblement avant de recevoir un signal de prise de vue, et dans lequel une trame est sélectionnée en réponse aux données de détection de tremblement évaluées, suite à la réception du signal de prise de vue ;

> dans lequel le premier groupe de pixels de détection de tremblement inclut une pluralité de pixels agencés en lignes et en colonnes, dans lequel, facultativement, le nombre de pixels dans chaque ligne est le même ; et

dans lequel le taux de trames d'image comprend un taux de capture de trames et dans lequel ledit ou lesdits plusieurs pixels du premier groupe de pixels de détection de tremblement sont chacun échantillonnés à un taux qui est au moins deux fois supérieur au taux de capture de trames.

FIG. 1

Case 1 : 1 pixel

210

Case 2 : m x n pixels

220

m

n

Case 3 : m x 1

230

m

Case 4 : m x 1

240

n

Case 5 m + n

250

m

n

# FIG. 2

320

310

| Data 1 i | Data 2 i | Data 1 i+1 | Data 2 i+1 | Data 1 i+2 | Data 2 i+2 | Data 1 i+3 | Data 2 i+3 | Data 1 i+4 | Data 2 i+4 |
|---|---|---|---|---|---|---|---|---|---|

Normal pixel array

Frame i          Frame i + 1          Frame i + 2          Frame i + 3          Frame i + 4

# FIG. 3

420

410

| D1 (i) | D2 (i) | D3 (i) | ......... | Dk (i) | D1 (i+1) | D2 (i+1) | D3 (i+1) | ......... | Dk (i+1) |
|---|---|---|---|---|---|---|---|---|---|

Frame i                                        Frame i + 1

# FIG. 4

**FIG. 5**

EP 2 323 376 B1

FIG. 6

EP 2 323 376 B1

**FIG. 7**

EP 2 323 376 B1

**FIG. 8**
**(PRIOR ART)**

Data from preview frame — 830

Data from capturing frame — 840

820

810

PD PD PD PD PD PD PD PD PD PD | Data from Capturing | Data from Capturing | Data from Capturing

Vsync

Preview Frame

Capturing Frame

860

850 — User press Capturing or snap shot button

Antishake calculation only can start from this point in Old Antishake device

EP 2 323 376 B1

940

Data for capturing frame period

| SHAKING DATA | SHAKING DATA | SHAKING DATA |

Capturing Frame

930

Data for preview period

| SHAKING DATA | SHAKING DATA | SHAKING DATA |

950

User presses Capturing or snap shot button

Preview Frame

Vsync

920

910

**FIG. 9**

FIG. 10

EP 2 323 376 B1

```
┌──────────────────┐      ┌──────────────┐
│ 1110             │      │ 1120         │
│ Shaking detection│─────▶│ Shaking      │────▶ ◇ User pressed ──No──┐
│ pixel group      │      │ Calculation  │      ◇ capturing button? ◇
└──────────────────┘      └──────────────┘      1130
```

1130 — User pressed capturing button?  — No — 1140 Calculate Max, Min, Average Or other Shaking related info for previous N period

Yes

1150 — If (Condition) — No — Calculate Max, Min, Average Or other Shaking related info for previous N period

Yes

1160 — Take a picture

**FIG. 11**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006043315 A